Europäisches Patentamt

European Patent Office

Office européen des brevets

(11) Veröffentlichungsnummer: **0 110 171**
**B1**

(12) EUROPÄISCHE PATENTSCHRIFT

(45) Veröffentlichungstag der Patentschrift: **11.04.90**

(21) Anmeldenummer: **83110863.4**

(22) Anmeldetag: **29.10.83**

(51) Int. Cl.$^5$: **G 01 C 21/14, G 08 G 1/123**

(54) Einrichtung zur Ermittlung des Standorts eines Fahrzeugs.

(30) Priorität: **20.11.82 DE 3242904**

(43) Veröffentlichungstag der Anmeldung:
**13.06.84 Patentblatt 84/24**

(45) Bekanntmachung des Hinweises auf die
Patenterteilung:
**11.04.90 Patentblatt 90/15**

(84) Benannte Vertragsstaaten:
**FR GB IT SE**

(56) Entgegenhaltungen:
**EP-A-0 036 119**
**DE-A-2 341 162**
**DE-A-2 910 386**
**FR-A-2 470 362**

(73) Patentinhaber: **TELDIX GmbH**
**Grenzhöfer Weg 36 Postfach 105608**
**D-6900 Heidelberg 1 (DE)**

(72) Erfinder: **Müller, Paul, Dr. rer.nat.**
**Am Büchsenackerhang 35**
**D-6900 Heidelberg 1 (DE)**

(74) Vertreter: **Kammer, Arno, Dipl.-Ing.**
**TELDIX GmbH Postfach 10 56 08 Grenzhöfer**
**Weg 36**
**D-6900 Heidelberg 1 (DE)**

**Beschreibung**

Die Erfindung betrifft eine Einrichtung zur Ermittlung des Standorts eines Fahrzeugs, das sich in einem vorgegebenen bekannten Bereich bewegt, enthaltend einen Weggeber, der die vom Fahrzeug zurückgelegten Wegstrecken mißt, einem Fahrtrichtungs-Änderungsdetektor, der die Änderungen der Fahrtrichtung anzeigt, einem Navigationsrechner zur Ermittlung des Standorts aus diesen Daten, einem Speicher, in dem eine Vielzahl von Koordinaten des befahrbaren Streckennetzes in dem Bereich abgespeichert sind und einer Vergleichs- und Korrektureinrichtung, in der die aus Anfangskoordinaten, zurückgelegter Wegstrecke und Fahrtrichtungsänderungen ermittelten Standorte mit den gespeicherten Koordinaten des Streckennetzes verglichen und durch Korrektur die wahrscheinlichen Koordinaten ermittelt werden.

Derartige Einrichtungen sind z.B. aus der DE—OS 23 41 162 und der DE—AS 24 46 264 bekannt. Dort wird der augenblicklich angezeigte Standort mit den gespeicherten Koordinaten verglichen und es wird die nächstliegende gespeicherte Koordinate als richtig angenommen und auf ihre Werte korrigiert.

Bei diesen Einrichtungen ist es notwendig, den Straßenplan des Bereichs mit allen Nebenstraßen und -wegen und zumindest allen markanten Stellen abzuspeichern, um eine Standortstützung zu ermöglichen. Auch ist es hier bei Kreuzungen mit mit geringem Richtungsunterschied abgehenden Straßen möglich, daß der Rechner sich irrt und auf einen falschen Standort korrigiert. Nach einem solchen "Irrtum" ist dann ohne Eingriff von außen eine echte Korrektur nicht mehr möglich.

Der Erfindung liegt die Aufgabe zugrunde, eine verbesserte Einrichtung zu schaffen, mit der einmal der Speicherbedarf reduziert werden kann, bei der andererseits aber auch immer wieder eine Korrektur durch den Rechner möglich ist.

Diese Aufgabe wird erfindungsgemäß dadurch gelöst, daß vorzugsweise im Fahrzeug ein Zwischenspeicher, der eine Vielzahl von Koordinaten der jeweils zuletzt durchfahrenen Wegstrecke vorgegebener Länge speichert, vorgesehen ist und daß die Vergleichs- und Korrektureinrichtung derart ausgelegt ist, daß die Vielzahl der Koordinaten dieser zwischengespeicherten Wegstrecke mit den Koordinaten von Abschnitten des abgespeicherten Streckennetzes verglichen werden, und daß aus der Feststellung der wenigstens weitgehenden Übereinstimmung des Verlaufs zwischen einer zwischengespeicherten Wegstrecke und einem abgespeicherten Streckenabschnitt der Korrekturwert für den ermittelten Standort gewonnen wird.

Bei der erfindungsgemäßen Lösung wird somit ein Kometenschweif aus Standortdaten gebildet, die den jeweils zuletzt zurückgelegten Weg des Fahrzeugs kennzeichnet. Dieser Kometenschweif sollte eine Wegstrecke $S_o$ von 1 bis 3 km umfassen. Um einzelne, offensichtlich falsche Standorte auszuschließen, werden Standortdaten nur dann in den Kometenschweif einbezogen, wenn sie in einem vorgegebenen Abstand zu einer abgespeicherten Linie (oder Punkt) liegen. In der Vergleichseinrichtung wird diese Wegstrecke mit den abgespeicherten Wegstrecken verglichen, wobei von einem aufgrund der vorher ermittelten Standorte wahrscheinlichen Standortraum (Kreis, drat) ausgegangen wird; d.h., der charakteristische Verlauf der Wegstrecke, auch mit eventuell falschen Standortdaten, wird in das abgespeicherte Straßennetz durch Vergleich eingepaßt. Der wahrscheinliche Standortraum kann z.B. durch ein Quadrat von einigen hundert Metern Seitenlänge um den angezeigten Standort oder einen entsprechenden Kreis gebildet werden. In ihm kann der Kometenschweifendpunkt, d.h., der letztermittelte Standort, nur liegen. Hierbei wird der Kometenschweif sowohl verschoben, als auch verdreht, um entweder einen vorhandenen Entfernungsfehler und/oder einen Richtungsfehler zu berücksichtigen. Dies kann z.B. durch spiralförmige zick-zack-förmige, auch mäanderförmige oder durch sonstige rechnerische Verlagerung des Kometenschweifes und Vergleich des verlagerten Kometenschweifs mit dem abgespeicherten Wegenetz geschehen. Paßt der Kometenschweif in einen abgespeicherten Straßenverlauf wenigstens näherungsweise, so ist der korrekte Standort gefunden und die Korrektur des Standorts im Fahrzeug kann durchgeführt werden. Wird die zurückgelegte Wegstrecke bei Fahrt auf einem nicht abgespeicherten Weg größer als die Länge des Kometenschweifs, so wird günstigerweise der wahrscheinliche Standortraum, in dem abgespeicherte Wege mit dem Kometenschweif verglichen werden, vergrößert.

Diese erfindungsgemäße Lösung bringt den Vorteil mit sich, daß nicht alle kleinen Nebenwege bei der Abspeicherung des Streckennetzes mit abgespeichert werden müssen. Es genügt, die wesentlichen Verkehrswege abzuspeichern, wenn für die Nebenwege gilt, daß sie nicht zu lange (z.B. nitch länger als 3 km) sind und daß nach Wiedereinbiegen in einen abgespeicherten Verkehrsweg oder auf weitere, abgespeicherte Verkehrswege auf diesem oder diesen wenigstens eine vorgegebene Strecke gefahren werden muß, so daß ein Einpassen des Kometenschweifs möglich ist, bevor man wieder auf einen nicht abgespeicherten Weg gelangt. Selbst, wenn beim Fahren auf den nicht abgespeicherten Strecken ein wesentlicher Fehler in die Standortanzeige einfloß, kann hier die richtige Korrektur immer wieder erfolgen. Auch die Hauptwege können bei dieser Methode grober, d.h., mit weniger Punkten abgespeichert werden.

Man kann bei der erfindungsgemäßen Einrichtung wie bei den bekannten Anordnungen den Speicher für das abgespeicherte Streckennetz und die Vergleichs- und Korrektureinrichtung in einer Zentrale vorsehen, wobei eine Funkverbindung zur Übertragung des Kometenschweifs vom Fahrzeug zu der Zentrale von Zeit zu Zeit und danach des korrigierten Standorts von der Zentrale zum Fahrzeug vorhanden sein muß. Dabei kann das Datentelegramm des Kometenschweifs aus den Koordinaten eines Punktes des Kometenschweifs bestehen, während die anderen Punkte des Kometenschweifs hierauf bezogene, inkrementale Datenangaben sein können. Dies ist zur Verkürzung des Datentelegramms sinnvoll. Zur Kanaleinsparung kann auch Multiplexübertragung zur Anwendung kommen.

Bei der erfindungsgemäßen Methode ist es wegen des insgesamt verringerten Speicherbedarfs auch möglich, den Speicher mit den Streckennetzdaten für verhältnismäßig große Flächen auf einfache und raumsparende Weise und die Vergleichs- und Korrektureinrichtung im Fahrzeug mitzuführen.

Der Zwischenspeicher für den Kometenschweif ist in sinnvoller Weise immer im Fahrzeug vorgesehen. Er kann ein entsprechend bemessenes Schieberegister sein, in das die neuen Standortdaten einlaufen, während die schon am längsten gespeicherten Daten ausgespeichert werden.

Auch bei der erfindungsgemäßen Methode ist es möglich, mit Hilfe der Korrekturwerte für den Standort Korrekturwerte für den Wegmesser und/oder für den Fahrtrichtungsdetektor zu errechnen. Man kann damit durch Berücksichtigung, z.B. der Kreiseldrift bei Verwendung eines Kreisels als Fahrtrichtungsdetektor, dessen Anzeige oder bei dem Wegemesser dessen fehlerhaftes Messen korrigieren und damit die direkt gewonnene Standortanzeige verbessern.

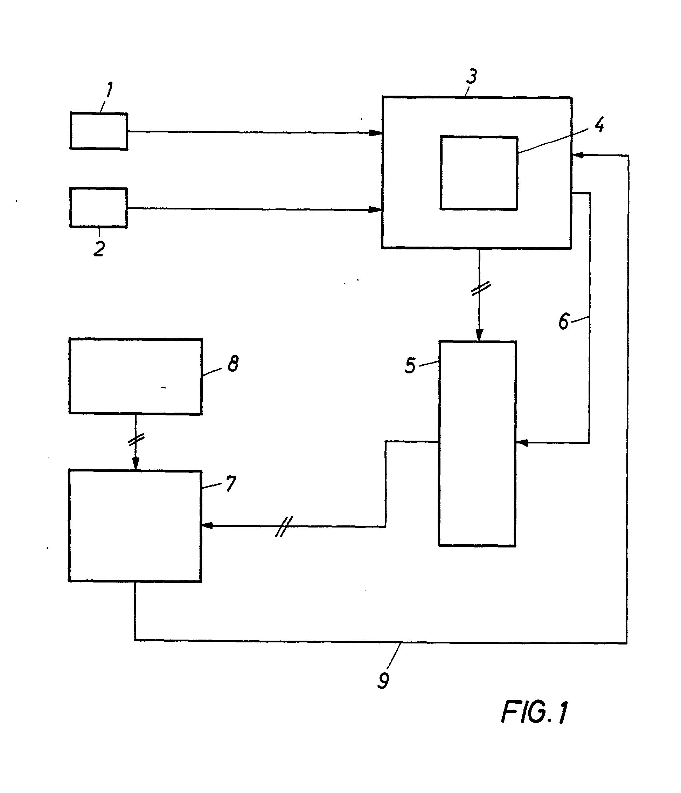

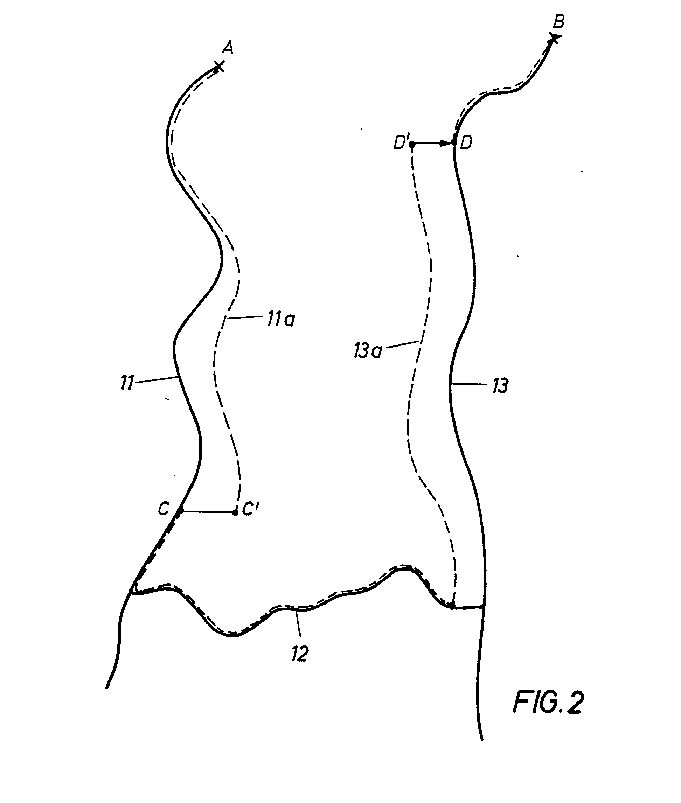

In der Zeichnung ist in Fig. 1 ein Ausführungsbeispiel für die erfindungsgemäße Einrichtung im Prinzip als Blockschaltbild dargestellt. Fig. 2 zweigt eine Skizze zur Erklärung der Funktion.

Die eigentliche, beim Ausführungsbeispiel der Fig. 1 im Fahrzeug untergebrachte Navigationseinrichtung besteht aus dem Fahrtrichtungsdetektor 1, z.B. einem Kurskreisel oder eine auf das Erdmagnetfeld ansprechende Magnetsonde, dem Weggeber 2, der den zurückgelegten Weg mißt und dem Navigationsrechner 3, der aus dem vorher ermittelten Standort und diesen Daten laufend den neuen Standort ermittelt und diesen in dem mit dem Rechner integrierten Kartengerät 4 zur Anzeige bringt.

An den Navigationsrechner 3 ist ein Zwischenspeicher 5 in Form eines Schieberegisters angeschaltet, dem die Standortwerte des Navigationsrechners 3 laufend zugeführt werden. Das Schieberegister ist so ausgelegt, daß es die ermittelten Standorte innerhalb einer vorgegebenen Weglänge, z.B. 3 km, zu speichern vermag. Die Übernahme der neuen Standortdaten geschieht so, daß, sobald ein neuer Standort ermittelt wurde, über die Leitung 6 die bereits gespeicherten Werte um einen Schritt im Register weitergeschoben werden und damit weiter an den Schwanz des Kometenschweifs rücken, wobei die letzten Daten ausgespeichert werden. Der freie erste Platz steht für die neuesten Standortdaten zur Verfügung.

Im Speicher 8 ist das Wegenetz des in Frage kommenden Bereichs durch Standortkoordinaten nach den oben angegebenen Gesichtspunkten (relativ grob, bestimmte Nebenwege nicht) abgespeichert. Die Vergleichs- und Korrektureinrichtung ist mit 7 bezeichnet.

Von Zeit zu Zeit vergleicht nun die Einrichtung 7 die Datenfolge des Registers 5 mit Datenfolgen aus dem Speicher 8, wobei der Kometenschweif hinsichtlich seines Anfangspunkts und damit insgesamt in einem bestimmten Maße (Quadrat des wahrscheinlichen Standorts) verschoben, aber auch verdreht wird. Dabei wird eine Datenfolge des Speichers 8 gefunden, deren Verlauf dem Verlauf der Datenfolge des Speichers 5 in etwa entspricht. Der Anfangspunkt dieser Datenfolge ist dann der Standort, der dem Navigationsrechner 3 über Leitung 9 zur Korrektur mitgeteilt wird. Die Daten in dem Register 5 brauchen nicht korrigiert werden, da sich nach ca. 3 km ein neuer Kometenschweif aufgebaut hat, und vorher eine Stützung nicht vorgenommen werden muß.

Fig. 2 zeigt einen Lageplan zur Erläuterung der Funktion der Erfindung. Das Fahrzeug fährt vom Ort A über einen Teil der Straße 11, deren Verlauf im Speicher 8 abgespeichert ist, über die Nebenstraße 12, deren Verlauf nicht abgespeichert ist und über einen Teil der Straße 13, deren Verlauf wieder abgespeichert ist, zum Ort B. Wegen einer Ungenauigkeit des Kurskreisels 1 wird auf dem Anzeigegerät 4 jedoch eine Fahrstrecke 11a zur Anzeige gebracht. Am Punkt C vergleicht die Einrichtung 7 den im Zwischenspeicher 5 abgespeicherten Kometenschweif 11a mit im Speicher 8 abgespeicherten Streckenabschnitten und erkennt, daß eine Verdrehung des Kometenschweifs 11a vorliegt. Im Punkt C wird der augenblickliche Standort und damit die Anzeige von Punkt C' auf Punkt C korrigiert. Bei Befahren der Straße 12 ergibt sich keine Möglichkeit der Korrektur. Nach dem Einbiegen in die Straße 13 ist ein Fehler der Standortanzeige aufgelaufen, die hier vom Weggeber herrührt. Der angezeigte Standortverlauf erfolgt somit entlang der scheinbaren Fahrstrecke 13a. Bei Erreichen des Punkts D ist der eingespeicherte Kometenschweif 13a ausreichend lang, um mit Fahrtstrecken der Umgebung verglichen werden zu können. Die Einrichtung 7 erkennt, daß der angezeigte Standort D' in den Punkt D korrigiert werden muß.

## Patentansprüche

1. Einrichtung zurt Ermittlung des Standorts eines Fahrzeugs, das sich in einem vorgegebenen bekannten Bereich bewegt, enthaltend eine Navigationsanlage zur Bestimmung des Standorts, einem Speicher, in dem eine Vielzahe von Koordinaten des befahrbaren Streckennetzes in dem Bereich abgespeichert sind und einer Vergleichs- und Korrektureinrichtung, in der die aus Anfangskoordinaten, zurückgelegter Wegstrecke und Fahrtrichtungsänderungen ermittelten Standorte mit den gespeicherten Koordinaten des Streckennetzes verglichen und durch Korrektur die wahrscheinlichen Koordinaten ermittelt werden, dadurch gekennzeichnet, daß ein Zwischenspeicher, der eine Vielzahl von Koordinaten der jeweils zuletzt durchfahrenen Wegstrecke vorgegebener Länge speichert, vorgesehen ist und daß die Vergleichs- und Korrektureinrichtung derart ausgelegt ist, daß die Vielzahl der Koordinaten dieser zwischengespeicherten Wegstrecke mit den Koordinaten von Abschnitten des abgespeicherten Streckennetzes verglichen werden, und daß aus der Feststellung der wenigstens weitgehenden Übereinstimmung des Verlaufs zwischen einer zwischengespeicherten Wegstrecke und einem abgespeicherten Streckenabschnitt der Korrekturwert für den ermittelten Standort gewonnen wird.

2. Einrichtung nach Anspruch 1, dadurch gekennzeichnet, daß der Speicher für die Koordinaten des Streckennetzes und die Vergleichs- und Korrektureinrichtung im Fahrzeug untergebracht sind.

3. Einrichtung nach Anspruch 1, dadurch gekennzeichnet, daß der Speicher für die Koordinaten des Streckennetzes sowie die Vergleichseinrichtung und die Korrektureinrichtung in einer Zentrale angeordnet sind und daß eine Funkverbindung zur Übertragung des Datentelegramms mit den Koordinaten der jeweils zuletzt durchfahrenen Wegstrecke vom Fahrzeug zur Zentrale und des daraus errechneten Standorts von der Zentrale zum Fahrzeug zwecks Korrektur der Fahrzeugstandortanzeige vorgesehen ist.

4. Einrichtung nach Anspruch 3, dadurch gekennzeichnet, daß das Datentelegramm aus den Koordinaten eines Wegpunkts und aus auf diese Koordinaten bezogene, inkrementale Datenangaben besteht.

5. Einrichtung nach Anspruch 3 oder 4, dadurch gekennzeichnet, daß die Übertragung des Datentelegramms im Multiplex-Betrieb vorgenommen wird.

6. Einrichtung nach einem der Ansprüche 1 bis 5, dadurch gekennzeichnet, daß die Vergleichs- und Korrektureinrichtung Rechenmittel aufweist, um aus der Positionskorrektur Korrekturgrößen für den Wegmesser und/oder Fahrtrichtungsänderungsdetektor zu errechnen.

**Revendications**

1. Dispositif pour déterminer la position d'un véhicule qui se déplace dans une région prédéterminée, connue, dispositif qui comprend un système de navigation pour déterminer la position, une mémoire dans laquelle sont stockées un grand nombre de coordonnées du réseau de trajets utilisable dans la région, ainsi qu'un dispositif de comparaison et de correction, dans lequel les positions déterminées, à partir des coordonnées de départ, du trajet parcouru et de changements de la direction de marche, sont comparées avec les coordonnées mémorisées du réseau de trajets, et dans lequel sont déterminées par correction, les coordonnées probables, caractérisé en ce qu'une mémoire intermédiaire est prévue, qui mémorise un grand nombre de coordonnées du trajet de longueur préfixée parcouru en dernier et que le dispositif de comparaison et de correction est conçu de manière que le grand nombre de coordonnées de ce trajet mémorisé temporairement soient comparées avec les coordonnées de tronçons du réseau de trajets contenu dans la mémoire et que la valeur de correction pour la position éterminée soit tirée de la constatation d'au moins une large concordance entre le tracé d'un trajet mémorisé temporairement et un tronçon de trajet contenu dans la mémoire.

2. Dispositif selon la revendication 1, caractérisé en ce que la mémoire pour les coordonnées du réseau de trajets et le dispositif de comparaison et de correction sont installés dans le véhicle.

3. Dispositif selon la revendication 1, caractérisé en ce que la mémoire pour les coordonnées du réseau de trajets, ainsi que le dispositif de comparaison et le dispositif de correction, sont installés dans un central et qu'une liaison radioélectrique est prévue pour transmettre un télégramme de données avec les coordonnées du trajet parcouru en dernier depuis le véhicule au central, de même que la transmission, depuis le central au véhicule, de la position calculée à partir de ces coordonnées en vue de la correction de l'affichage de la position du véhicle.

4. Dispositif selon la revendication 3, caractérisé en ce que le télégramme de données est constitué par les coordonnées d'un point de parcours et par des indications de données incrémentales se rapportant à ces coordonnées.

5. Dispositif selon la revendication 3 ou 4, caractérisé en ce que la transmission du télégramme de données s'effectue en mode multiplex.

6. Dispositif selon une des revendications 1 à 5, caractérisé en ce que le dispositif de comparaison et de correction comporte des moyens de calcul pour calculer, à partir de la correction de position, des grandeurs correctrices pour l'indicateur de la distance parcourue et/ou le détecteur de changement de direction de marche.

**Claims**

1. A device for determining the position of a vehicle which is moving in a given known region, containing a navigation installation to find the position, a store in which a plurality of coordinates of the route pattern which can be covered in the region are stored, and a comparison and correction device in which the positions determined from initial coordinates, stretch of road covered and changes in direction are compared with the stored coordinates of the route pattern and the probable coordinates are determined by correction, characterised in that a temporary store is provided which stores a plurality of coordinates of the particular stretch of road of given length last travelled over, and that the comparison and correction device is designed in such a manner that the plurality of coordinates of this temporarily stored stretch of road are compared with the coordinates of portions of the stored route pattern, and that the correction value from the position determined is obtained from ascertaining the at least far-reaching coincidence between the course of a temporarily stored stretch of road and a stored portion of route.

2. A device according to Claim 1, characterised in that the store for the coordinates of the route pattern and the comparison and correction device are accommodated in the vehicle.

3. A device according to Claim 1, characterised in that the store for the coordinates of the route pattern as well as the comparison device and the correction device are disposed in a central office and that a radio link is provided to transmit the data telegram with the coordinates of the particular stretch of road last travelled over by the vehicle to the central office and the position calculated therefrom from the central office to the vehicle for the purpose of correction of the vehicle position indication.

4. A device according to Claim 3, characterised in that the data telegram consists of the coordinates of a point on the route and incremental data information related to these coordinates.

5. A device according to Claim 3 or 4, characterised in that the transmission of the data telegram is effected in multiplex operation.

6. A device according to any one of Claims 1 to 5, characterised in that the comparison and correction device comprises calculating means to calculate correction quantities for the odometer and/or change-of-direction detector from the position correction.

*FIG.1*

*FIG.2*